# EUROPEAN PATENT APPLICATION

(11) **EP 1 220 098 A2**
(43) Date of publication of application: **03.07.2002**
(21) Application number: 01309416.4
(22) Date of filing: 07.11.2001
(51) Int. Cl.: G06F 11/34

(54) **Identifying web-log data representing a single user session**

(30) Priority: 29.12.2000 US 752355
(71) Applicant: NCR INTERNATIONAL INC., Dayton, Ohio 45479 (US)
(72) Inventor: Pricer, James E., San Diego, CA 92101 (US); Groenen, Frank R., San Diego, CA 92128 (US)
(74) Representative: Williamson, Brian

(57) **Abstract**

Tracking the actions of an Internet user involves loading data from the transaction log of an Internet server into a database system. The data includes an entry for each request to the Internet server, including information identifying which user submitted the request and information identifying the time at which the request was received. The database system recreates the actions, or clickstream, of a particular user by selecting all entries associated with that user and corresponding to a single user session.

## Description

Companies that do business on the Internet are beginning to realize that they could improve sales and customer service by tracking the actions of individual customers who visit the companies' Web sites. To this end, many companies have begun using the data collected by Web servers in trying to reconstruct the "clickstreams" of individual customers visiting those Web sites. The challenge, however, lies in making sense of the vast amount of data collected by Web servers during the course of even a single day.

In general, a Web server records a "hit" in its Web log each time a visitor requests a piece of data from the server. Studies suggest that each request for a Web page produces, on average, five hits to the web server - one hit for HTML text and four hits for other objects, such as images and audio clips, associated with the Web page. Given that individual users often request several Web pages per minute and that Web sites typically host scores of concurrent users, even a moderately busy Web site often experiences millions, sometimes billions, of hits each day. Reconstructing even a single page view for a single customer requires combing through hundreds, even thousands, of pages of Web-log data. Reconstructing the entire clickstream for a particular customer is a daunting task indeed.

Tracking the actions of an Internet user involves loading data from the transaction log of an Internet server into a database system. The data includes an entry for each request to the Internet server, including information identifying which user submitted the request and information identifying the time at which the request was received. The database system recreates the actions, or clickstream, of a particular user by selecting all entries associated with that user and corresponding to a single user session.

Other features and advantages will become apparent from the description and claims that follow.

According to a first aspect of the present invention there is provided a method for use in tracking the actions of an Internet user, the method comprising: loading data from a transaction log of an Internet server into a database system, where the data includes an entry for each request to the Internet server, including information identifying which user submitted the request and information identifying the time at which the request was received; and selecting from the data all entries associated with a particular user and corresponding to a single session of that user.

According to a second aspect of the present invention there is provided a computer program, stored on a tangible storage medium, for use in tracking the actions of an Internet user, the program comprising executable instructions that cause a computer to: load data from a transaction log of an Internet server into a database system, where the data includes an entry for each request to the Internet server, including information identifying which user submitted the request and information identifying the time at which the request was received; and select from the data all entries associated with a particular user and corresponding to a single session of that user.

According to a third aspect of the present invention there is provided a database system comprising: one or more data-storage facilities for use in storing data received from a transaction log of an Internet server computer, where the data includes an entry for each request to the Internet server computer, including information identifying which user submitted the request and information identifying the time at which the request was received; and one or more processing modules configured to manage the data stored in the data-storage facilities; and a database-management component configured to select from the data all entries associated with a particular user and corresponding to a single session of that user.

An embodiment of the present invention will now be described, by way of example, with reference to the accompanying drawings, in which:
FIGS. 1 and 2 are schematic diagrams of a system for use in capturing and analyzing web-log data from Internet servers; and
FIG. 3 is a flow chart of a technique for use in reconstructing the clickstreams of visitors to an Internet site in accordance with the present invention.

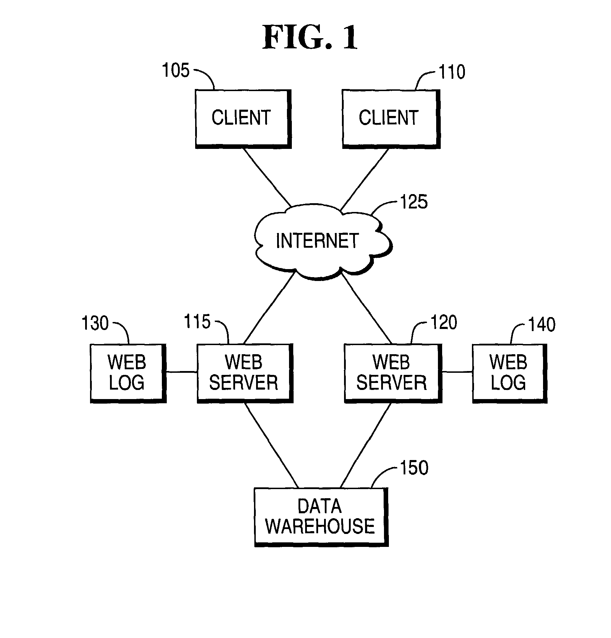

FIG. 1 shows a system for use in capturing and analyzing the data stored in the Web log of a typical Internet server. In general, one or more customers of an Internet-based business, using one or more client computing systems 105, 110, visit the business' Web servers 115, 120 through the Internet 125. The Web servers 115, 120 catalog every piece of information requested by the client systems 105, 110 in Web logs 130, 135. Table I below shows the types of entries found in a typical Web log.

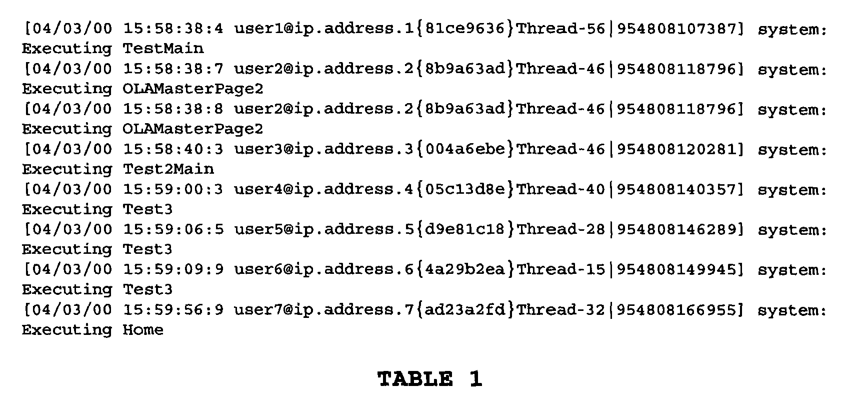

Web-log entries usually include several pieces of information, such as a date-and-time stamp for each request submitted to the Web server, a code identifying the user or client system making the request, and the name of the action or information requested. In the example shown here, the first Web log entry includes the date-and-time stamp "04/03/00 15:58:38:4," the user-ID code "user@ip.address.1," and the action code "system: Execute TestMain."

The Web servers 115, 120 maintained by the business both connect to a database management system (DBMS) 150, such as a Teradata Active Data Warehousing System available from NCR Corporation. The DBMS 150 gathers data from the Web logs 130, 140 maintained by the Web servers 115, 120 and uses this data to reconstruct the clickstreams associated with individual user sessions.

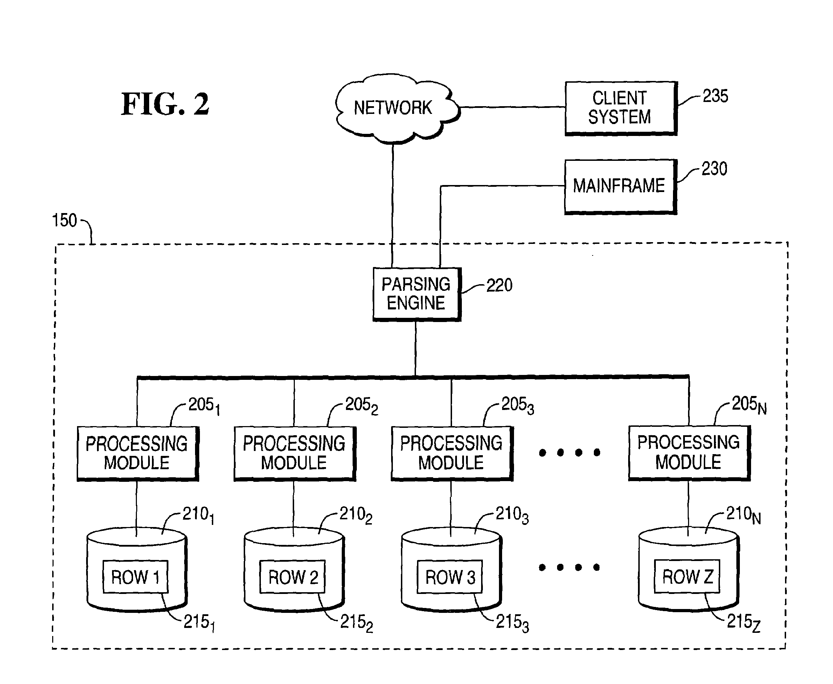

FIG. 2 shows a sample architecture for the DBMS 150. The DBMS 150 includes one or more processing modules 205_{1...N} that manage the storage and retrieval of data in data-storage facilities 210_{1...N}. Each of the processing modules 205_{1...N} manages a portion of a database that is stored in a corresponding one of the data-storage facilities 210_{1...N}. Each of the data-storage facilities 210_{1...N} includes one or more disk drives.

As described below, the system stores Web-log data in one or more tables in the data-storage facilities 210_{1...N}. The rows 215_{1...Z} of the tables are stored across multiple data-storage facilities 210_{1...N} to ensure that the system workload is distributed evenly across the processing modules 205_{1...N}. A parsing engine 220 organizes the storage of data and the distribution of table rows 215_{1...Z} among the processing modules 205_{1...N}. The parsing engine 220 also coordinates the retrieval of data from the data-storage facilities 210_{1...N} in response to queries received from a user at a mainframe 230 or a client computer 235. The DBMS 150 usually receives queries in a standard format, such as the Structured Query Language (SQL) put forth by the American National Standards Institute (ANSI).

One challenge in reconstructing the clickstream associated with an individual customer is identifying the points at which the user's session began and ended or, more importantly, identifying which Web-log entries are associated with a single browser session. Because browser sessions typically end after some selected amount of inactivity *(i.e.,* 30 minutes), the DBMS can treat any two Web-log entries that occur within this time range and that originate from a single user as though they occurred within a single user session. A DBMS function that compares the values of two date-and-time-stamps is useful in identifying Web-log entries that occurred within a single user session and thus that lie within a clickstream. The "Moving Difference" (MDIFF) extension to SQL recognized by the Teradata DBMS is one such DBMS function.

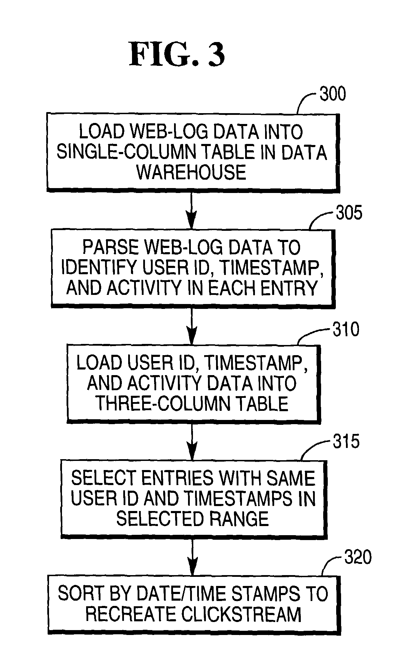

FIG. 3 shows one technique for conducting clickstream analysis of Web-log data using the MDIFF DBMS function. The DBMS first loads the Web-log data from the Web servers into a single-column table (step 300). Below is sample SQL code for use in loading the Web-log data into the database.

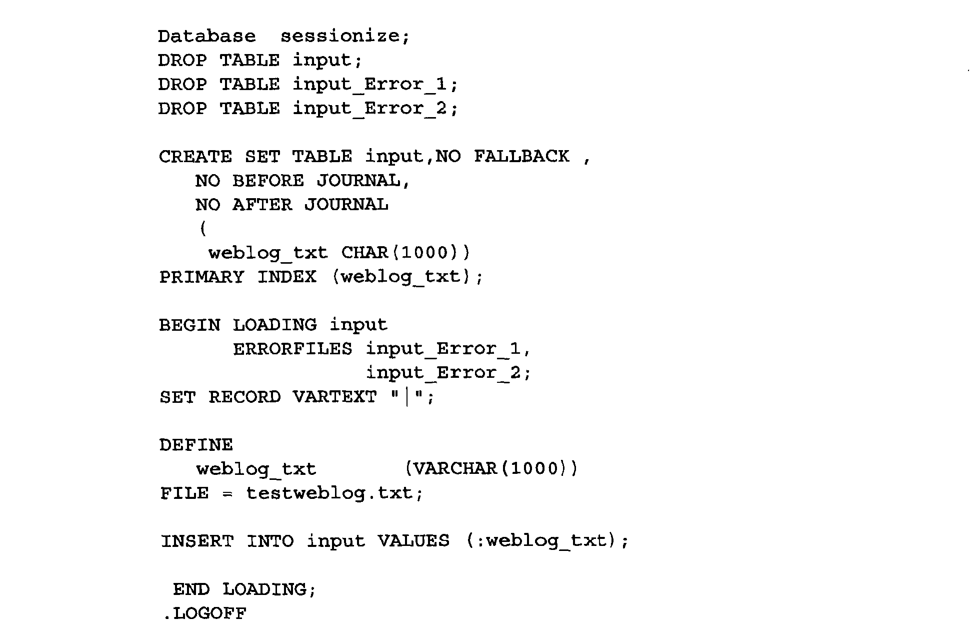

The DBMS then parses the data to identify the pieces of information to be extracted from each Web-log entry (step 305) and places this information in a table having one column for each of these pieces of information (step 310). For example, in the example above, the DBMS creates a table having three columns - one to store date-and-time stamps, one to store user-ID codes, and one to store the Web-log text describing the action or information requested. The sample SQL code below is useful in parsing the Web-log data into a three-column table.

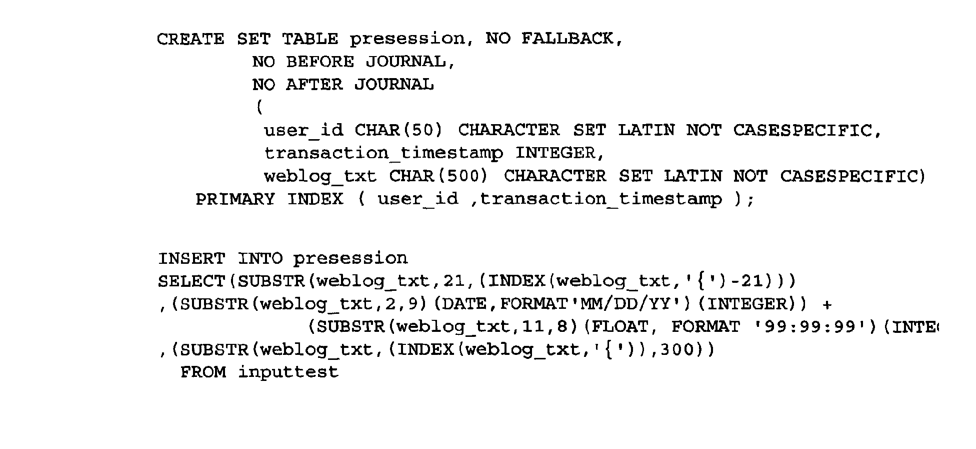

After parsing the Web-log data and extracting the desired information, the DBMS identifies all Web-log entries associated with an individual user session (step 315). One technique for doing so involves identifying all entries that list a single user-ID code and then selecting from these the entries with date-and-time stamps that differ by less than some prescribed amount. The sample SQL code below uses the MDIFF function of the Teradata DBMS to determine when the date-and-timestamps associated with two different Web-log entries lie within 30 minutes of each other. When this occurs, and when those Web-log entries identify a single user-ID code, the DBMS concludes that the two Web-log entries belong to a single clickstream.

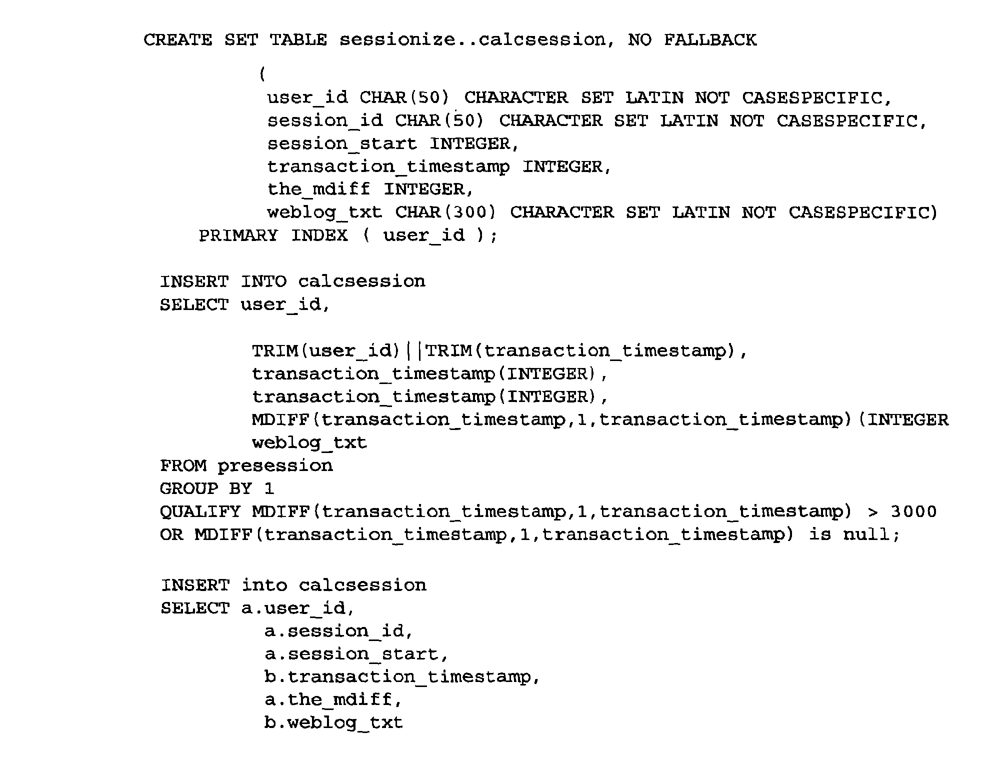

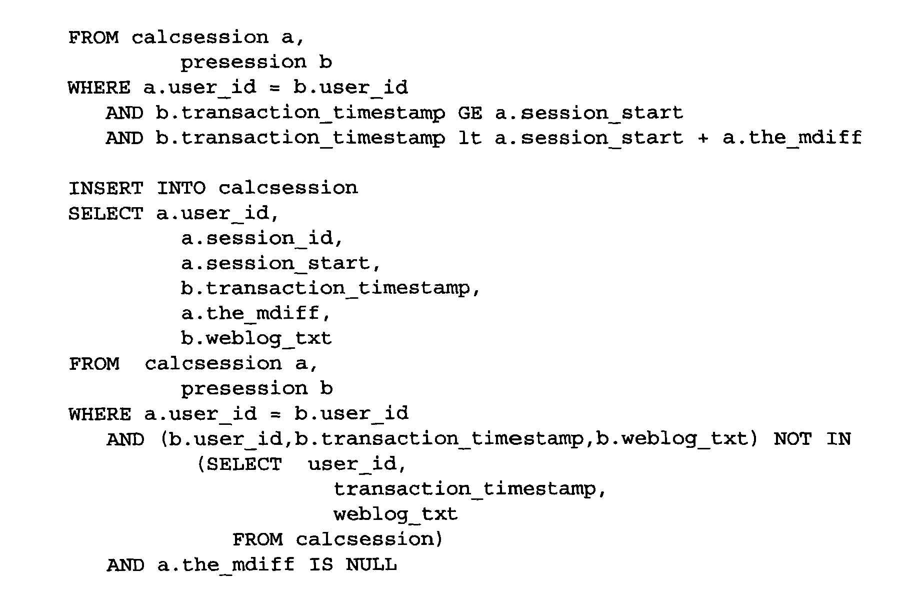

The DBMS then sorts the selected Web-log entries by date-and-time stamp value to recreate the clickstream (step 320). In some embodiments, the clickstream data itself is stored to disk for later analysis.

The various implementations of the invention are realized in electronic hardware, computer software, or combinations of these technologies. Most implementations include one or more computer programs executed by a programmable computer. In general, the computer includes one or more processors, one or more data-storage components (*e.g.*, volatile and nonvolatile memory modules and persistent optical and magnetic storage devices, such as hard and floppy disk drives, CD-ROM drives, and magnetic tape drives), one or more input devices (*e.g*., mice and keyboards), and one or more output devices (*e.g.,* display consoles and printers).

The computer programs include executable code that is usually stored in a persistent storage medium and then copied into memory at run-time. The processor executes the code by retrieving program instructions from memory in a prescribed order. When executing the program code, the computer receives data from the input and/or storage devices, performs operations on the data, and then delivers the resulting data to the output and/or storage devices.

The text above describes one or more specific embodiments of a broader invention. The invention also is carried out in a variety of alternative embodiments and thus is not limited to those described here. For example, while the invention has been described here in terms of a DBMS that uses a massively parallel processing (MPP) architecture, other types of database systems, including those that use a symmetric multiprocessing (SMP) architecture, are also useful in carrying out the invention. Modifications may be incorporated without departing from the scope of the present invention.

## Claims

1. A method for use in tracking the actions of an Internet user, the method comprising:
loading data from a transaction log of an Internet server into a database system, where the data includes an entry for each request to the Internet server, including information identifying which user submitted the request and information identifying the time at which the request was received; and
selecting from the data all entries associated with a particular user and corresponding to a single session of that user.

2. A method as claimed in claim 1, where the step of selecting includes selecting entries with time stamps lying in a predetermined range.

3. A method as claimed in claim 1 or claim 2, including sorting the selected entries chronologically to reconstruct the user's clickstream.

4. A computer program, stored on a tangible storage medium, for use in tracking the actions of an Internet user, the program comprising executable instructions that cause a computer to:
load data from a transaction log of an Internet server into a database system, where the data includes an entry for each request to the Internet server, including information identifying which user submitted the request and information identifying the time at which the request was received; and
select from the data all entries associated with a particular user and corresponding to a single session of that user.

5. A program as claimed in claim 4, where, in selecting entries, the computer selects entries with time stamps lying in a predetermined range.

6. A program as claimed in claim 4 or claim 5, where the computer also sorts the selected entries chronologically to reconstruct the user's clickstream.

7. A database system comprising:
one or more data-storage facilities for use in storing data received from a transaction log of an Internet server computer, where the data includes an entry for each request to the Internet server computer, including information identifying which user submitted the request and information identifying the time at which the request was received; and
one or more processing modules configured to manage the data stored in the data-storage facilities; and
a database-management component configured to select from the data all entries associated with a particular user and corresponding to a single session of that user.

8. A system as claimed in claim 7, where the database-management component is configured to select entries with time stamps lying in a predetermined range.

9. A system as claimed in claim 7 or claim 8, where the database-management component is configured to compare time stamps of entries and to select each entry for which the time stamp differs from the time stamp of another entry by less than a predetermined amount.

10. A system as claimed in any of claims 7 to 9, where the database-management component is configured to sort the selected entries chronologically to reconstruct the user's clickstream.
